# FASCICULE DE BREVET EUROPEEN

(11) **EP 4 289 597 B1**
(45) Date de publication et mention de la délivrance du brevet: **21.10.2026**
(21) Numéro de dépôt: 23173276.9
(22) Date de dépôt: 15.05.2023
(51) Int. Cl.: B29C 49/42, B29C 49/68, B29C 49/64, B29C 49/06, B29C 49/78

(54) **STATION DE CHAUFFAGE DE PREFORMES COMPORTANT DES MOYENS DE REFROIDISSEMENT**
VORFORMHEIZSTATION MIT KÜHLVORRICHTUNG
PREFORM HEATING STATION COMPRISING COOLING MEANS

(30) Priorité: 10.06.2022 FR 2205574
(43) Date de publication de la demande: 13.12.2023
(73) Titulaire: Sidel Participations, 76930 Octeville-sur-Mer (FR)
(72) Inventeur: SOUFFES, Denis, 76930 OCTEVILLE-SUR-MER (FR); FEUILLOLEY, Guy, 76930 OCTEVILLE-SUR-MER (FR)
(74) Mandataire: Sidel Group

(56) Documents cités:
- CN-A- 107 263 846
- US-A1- 2009 317 506
- US-A1- 2021 308 931
- US-B2- 8 951 036

## Description

### Domaine technique de l'invention

L'invention concerne une station de chauffage de préformes en matériau thermoplastique pour une installation de production de récipients par formage desdites préformes, comportant un dispositif de convoyage de préformes comportant des supports individuels circulant en un circuit fermé, chaque support individuel étant destiné à transporter une préforme en déplacement continu, le circuit fermé comportant au moins un tronçon de chauffage de préformes bordé d'au moins une rangée d'émetteurs de rayonnement électromagnétique monochromatique ou pseudomonochromatique et au moins un tronçon non chauffé dénué de moyens de chauffage des préformes transportées.

### Arrière-plan technique

Il est connu de fabriquer des récipients par formage, notamment par étirage-soufflage, de préformes en matériau thermoplastique. Le matériau formant les préformes est généralement dans un état amorphe qui n'est pas aptes à permettre leur formage à froid. Préalablement à l'opération de formage, les préformes sont donc chauffées à une température de transition vitreuse qui permet leur conformation en récipient final.

Plus particulièrement, les préformes présentent généralement un corps sensiblement cylindrique de révolution à paroi tubulaire épaisse qui est fermé à l'une de ses extrémités axiales par un fond à paroi épaisse, et qui est prolongé à son autre extrémité par un col, lui aussi tubulaire. Le col est conformé à sa forme et à ses dimensions définitives tandis que le corps de la préforme est destiné à subir une déformation relativement importante pour le conformer en récipient lors d'une étape de formage.

Pour cette raison il est préférable que seul le corps de la préforme soit chauffé au-delà de la température de transition vitreuse, le col demeurant à une température inférieure à ladite température de transition vitreuse pour éviter sa déformation pendant la fabrication du récipient.

La fabrication de récipients en grande série est réalisée dans une installation de production qui comporte une station de chauffage qui permet, lors d'une étape de chauffage, de rendre malléable le corps de la préforme par chauffage au-delà de la température de transition vitreuse. Lors de l'étape de chauffage, chaque préforme est transportée le long d'une zone de chauffage exposé à un rayonnement chauffant.

L'installation de production comporte aussi une station de formage qui est agencée en aval de la station de chauffage selon le sens de circulation des préformes dans l'installation de production. Lors de l'étape de formage, la préforme chaude est placée dans une unité de formage, par exemple dans un moule de la station de formage qui présente une empreinte de moulage conforme au récipient à obtenir. Un fluide sous pression, tel que de l'air, est alors injecté dans le corps malléable de la préforme afin d'en plaquer la paroi contre l'empreinte du moule. Généralement, l'injection de fluide sous pression est précédée et/ou accompagnée d'un étirage axial de la préforme, notamment au moyen d'une tige d'étirage insérée dans la préforme. De manière connue, le corps est ainsi soumis à un étirage bi-axial.

Les stations de chauffage sont généralement équipées d'au moins un tunnel de chauffage muni de lampes à incandescence de type halogène, qui rayonnent suivant la loi de Planck sur un spectre continu.

Avant de lancer toute production, il convient de préchauffer le tunnel de chauffage pour l'amener, à l'aide des lampes, à une température convenable susceptible de conférer aux préformes un profil thermique permettant de mener ensuite à bien le formage.

Ce préchauffage est lent et nécessite des réglages délicats.

En outre, les lampes rayonnent généralement de la chaleur dans toutes les directions. Pour permettre d'augmenter l'efficacité de la station de chauffage, il est connu d'agencer des réflecteurs qui permettent de réfléchir le rayonnement chauffant en direction des préformes.

Le rayonnement émis par les lampes n'étant pas directif, de nombreux éléments de la station de chauffage, dont notamment les réflecteurs, accumulent de la chaleur lors du préchauffage. En outre, l'air contenu dans le tunnel est aussi chauffé par ce rayonnement. Il est donc connu d'équiper les tunnels de chauffage de moyens de refroidissement par ventilation afin de chasser l'air chaud et de refroidir les différents composants du tunnel de chauffage.

Un tel dispositif engendre une consommation d'énergie très élevée et un temps de chauffe particulièrement long.

En outre, il est préférable que, au moment de son formage, la paroi de la préforme présente un gradient thermique croissant dans le sens de son épaisseur depuis sa face externe vers sa face interne. Or, les lampes halogène chauffant fortement la face externe du corps de la préforme, ce gradient est produit par diffusion passive de la chaleur à travers la paroi vers l'intérieur de la préforme.

Pour toutes ces raisons, les stations de chauffage équipées de tels moyens de chauffage comportent généralement deux tunnels de chauffage qui sont répartis sur deux tronçons rectilignes de transport des préformes et séparés par un virage dans lequel la chaleur commence à se diffuser vers l'intérieur de la paroi.

Pour permettre d'obtenir un chauffage rapide, précis et économique des préformes, on a déjà proposé de remplacer les lampes de chauffage à halogène par des émetteurs laser. Un tel dispositif de chauffage permet avantageusement de chauffer uniquement la paroi de la préforme sans échauffer l'air. De ce fait, les stations de chauffage ne sont plus équipées que d'un seul tunnel de chauffage sensiblement plus court que la longueur cumulée de deux tunnels de chauffage équipés de lampes à halogène.

En outre, les émetteurs laser chauffant très peu l'air ou les composants environnant, il n'est plus nécessaire d'équiper le tunnel de chauffage de moyens de refroidissement.

De manière connue, les préformes sont portées par un mandrin qui est équipé d'un radiateur de refroidissement. Ainsi, lors de leur passage dans le tunnel de chauffage, les préformes transmettent une partie de la chaleur qu'elles absorbent au mandrin. Les radiateurs permettent d'éviter que la chaleur ne s'accumule dans les mandrins en évacuant la chaleur par rayonnement et par convection après leur sortie du tunnel de chauffage et avant d'y pénétrer à nouveau. Ceci permet ainsi d'éviter que le col des préformes ne soient endommagés par des mandrins trop chauds.

Lorsqu'on souhaite augmenter la cadence de production des récipients, la vitesse de défilement des préformes peut être augmentée. Cependant, si cette vitesse augmente trop, le radiateur ne dispose plus de suffisamment de temps pour évacuer la chaleur accumulée dans le mandrin avant son prochain passage dans la zone de chauffage.

Il a donc été proposé d'équiper à nouveau le tunnel de chauffage de moyens de refroidissement, comme cela est toujours pratiqué dans toutes les stations de chauffage actuellement équipées de moyens de refroidissement.

Cependant, on a constaté que cela perturbait le chauffage des préformes et engendrait à nouveau des dépenses d'énergie plus élevées pour compenser un refroidissement pendant la chauffe.

Par ailleurs, de nombreuses opérations de contrôle et/ou de traitement des préformes doivent être réalisées sur le trajet des préformes à travers l'installation de fabrication.

Ces opérations sont réalisées sur des zones très courtes du trajet de transport dans la station de chauffage, par exemple dans les virages.

Cependant, il n'est pas possible de réaliser certaines opérations de contrôle de manière fiable à proximité immédiate d'un tunnel de chauffage. Les rayonnements chauffants s'échappant de l'extrémité du tunnel de chauffage risquent en effet de perturber le fonctionnement des moyens de contrôle, par exemple des capteurs de température ou des spectromètres.

De plus, les zones présentes dans les virages sont susceptibles d'être trop courtes pour permettre la réalisation correcte des opérations de contrôle ou de traitement.

Il a donc été proposé de réaliser ces opérations sur des portions plus longues qui nécessitent d'allonger la longueur de la station de chauffage plus que nécessaire pour le simple chauffage des préformes.

Selon une autre variante, il est connu de réaliser ces opérations sur des stations dédiées de l'installation de fabrication qui sont généralement agencées en amont de la station de chauffage.

Ainsi, la réalisation de ces opérations de contrôle et/ou de traitement nécessite des agencements coûteux et/ou encombrants.

Le document US 8 951 036 B2 décrit une station de chauffage de préformes en matériau thermoplastique pour une installation de production de récipients par formage desdites préformes, comportant un dispositif de convoyage de préformes comportant des supports individuels circulant en un circuit fermé, chaque support individuel étant destiné à transporter une préforme en déplacement continu, le circuit fermé comportant :- plusieurs tronçons de chauffage de préformes chauffées par des barres de chauffage IR;- au moins un tronçon non chauffés dénué de moyens de chauffage des préformes transportées et étant séparé d'un tronçon chauffé adjacent par au moins un virage aval, le tronçon non chauffé étant bordé par des moyens de refroidissement des supports individuels.

### Résumé de l'invention

L'invention propose une station de chauffage de préformes en matériau thermoplastique pour une installation de production de récipients par formage desdites préformes, comportant un dispositif de convoyage de préformes comportant des supports individuels circulant en un circuit fermé, chaque support individuel étant destiné à transporter une préforme en déplacement continu, le circuit fermé comportant :
- au moins un tronçon de chauffage de préformes bordé d'au moins une rangée d'émetteurs de rayonnement électromagnétique monochromatique ou pseudomonochromatique ;
- au moins un tronçon non chauffé dénué de moyens de chauffage des préformes transportées ;
- chaque tronçon non chauffé étant séparé d'un tronçon chauffé adjacent par au moins un virage amont et par au moins un virage aval.

Dans la station de chauffage selon l'invention, le tronçon non chauffé est bordé par des moyens de refroidissement des supports individuels.

Selon un autre aspect de l'invention, les moyens de refroidissement sont formés par un dispositif de ventilation qui émet un flux d'air traversant le tronçon non chauffé.

Selon un autre aspect de l'invention, le flux d'air émis par le dispositif de ventilation est orienté vers une direction opposée au tronçon de chauffage.

Selon un autre aspect de l'invention, chaque support individuel comporte un mandrin destiné à être inséré dans un col d'une préforme.

Selon un autre aspect de l'invention, chaque support individuel comporte un radiateur qui est agencé pour évacuer la chaleur accumulée par le mandrin et qui est agencé à l'extérieur de la préforme lorsque le mandrin est inséré dans le col, les moyens de refroidissement permettant un refroidissement du radiateur.

Selon un autre aspect de l'invention, au moins un tronçon non chauffé est bordé par un dispositif de mesure de la température des préformes.

Selon un autre aspect de l'invention, au moins un tronçon non chauffé est bordé par un dispositif de décontamination des préformes.

Selon un autre aspect de l'invention, le dispositif de décontamination des préformes comporte des émetteurs de rayons ultraviolets.

Selon un autre aspect de l'invention, le dispositif de décontamination des préformes comporte au moins une buse de pulvérisation d'un liquide de décontamination, tel que du peroxyde d'hydrogène.

Selon un autre aspect de l'invention, le tronçon non chauffé est bordé par un dispositif de contrôle visuel des préformes.

Selon un autre aspect de l'invention, le tronçon non chauffé est bordé par un spectromètre de contrôle des préformes.

### Brève description des figures

D'autres caractéristiques et avantages de l'invention apparaitront au cours de la lecture de la description détaillée qui va suivre pour la compréhension de laquelle on se reportera aux dessins annexés suivants.
La [Fig.1] est une vue schématique de dessus qui représente une station de chauffage réalisée selon les enseignements de l'invention.
La [Fig.2] est une vue en coupe transversale qui représente un support individuel transportant une préforme le long d'un tronçon non chauffé de la station de chauffage de la [Fig.1].

### Description détaillée de l'invention

Dans la suite de la description, des éléments présentant une structure identique ou des fonctions analogues seront désignés par une même référence.

Dans la suite de la description, on adoptera à titre non limitatif des orientations longitudinale, dirigée selon le sens de déplacement des préformes le long de leur trajet de transport, verticale, dirigée selon le sens de la gravité, et transversale indiquées par le trièdre L,V,T des figures.

Dans la suite de la description, les termes "amont" et "aval" seront employés en référence au sens de déplacement des préformes le long de leur trajet de transport.

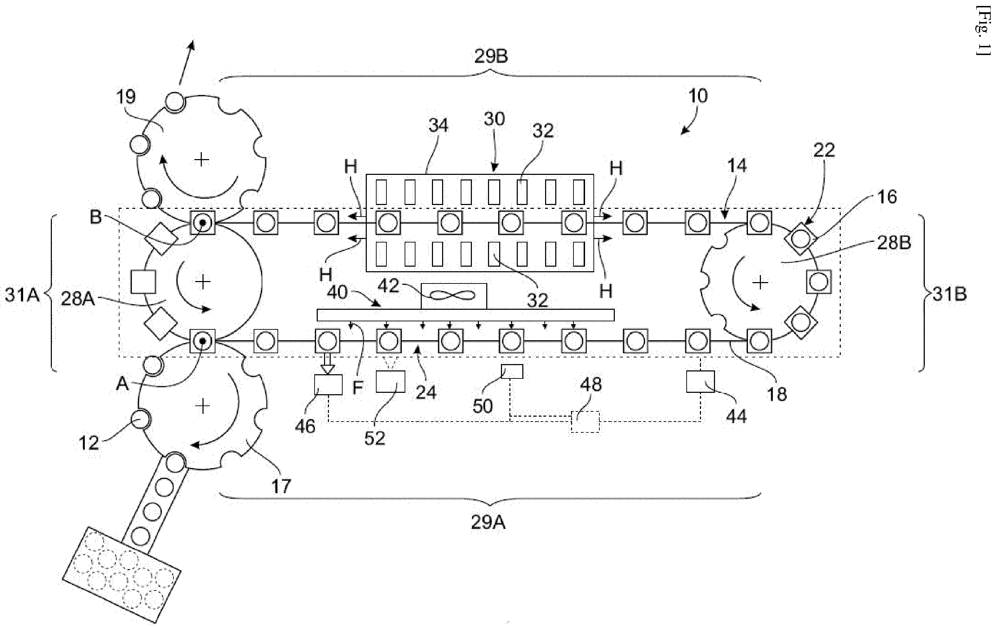

On a représenté à la [Fig.1] une station 10 de chauffage de préformes 12 en matériau thermoplastique. La station 10 de chauffage appartient à une installation (non représentée) de fabrication de récipient en matériau thermoplastique par formage, notamment étirage-soufflage, desdites préformes 12.

La station 10 de chauffage comporte un dispositif 14 de convoyage des préformes 12 en file. Le dispositif 14 de convoyage comporte des supports 16 individuels circulant en circuit fermé dans la station 10 de chauffage. Chaque support 16 individuel est destiné à transporter une préforme 12 en déplacement ininterrompu le long d'un trajet 18 de transport prédéterminé depuis un point "A" d'entrée de la station 10 de chauffage qui est alimenté par une file de préformes 12 jusqu'à un point "B" de sortie en direction d'une station (non représentée) de formage, notamment de moulage par soufflage ou par étirage-soufflage.

Les préformes 12 se déplacent ainsi en file à travers l'installation de production en suivant un flux de production depuis le point "A" d'entrée de la station 10 de chauffage jusqu'à une sortie de l'installation sous forme de récipients finis conformes, après formage dans la station de formage. Le trajet 18 de transport forme un tronçon de ce flux de production des préformes 12.

Le dispositif 14 de convoyage est ici alimenté en préformes 12 froides par une roue 17 de transfert agencée tangentiellement au point "A" d'entrée. A la fin de leur trajet 18 de transport, les préformes 12 chaudes sont prises en charge individuellement par une roue 19 de transfert agencée tangentiellement au point "B" de sortie. Depuis le point "B" de sortie jusqu'au point "A" d'entrée, les supports 16 individuels du dispositif 14 de convoyage circulent à vide.

Généralement, chaque support 16 individuel comporte des moyens susceptibles d'entraîner la préforme 12 en rotation autour de son axe principal durant son déplacement le long d'au moins une partie du trajet 18 de transport pour permettre un chauffage homogène d'un corps 33 de la préforme 12. Un tel support 16 individuel est parfois appelé "tournette".

Le dispositif 14 de convoyage comporte une pluralité d'éléments 22 de transport.

Selon un premier mode de réalisation du dispositif 14 de transport représenté à la [Fig.1], les éléments 22 de transport forment les maillons d'une chaîne 24 de transport fermée. La chaîne 24 de transport est souple. A cet effet, les éléments 22 de transport sont montés articulés les uns aux autres autour d'axes verticaux. La chaîne 24 de transport est montée déplaçable par rapport à un bâti fixe par rapport au sol de la station 10 de chauffage.

Le dispositif 14 de convoyage comprend, par ailleurs, une première roue 28A de guidage de la chaîne 24 de transport et une deuxième roue 28B de guidage de la chaîne 24 de transport montées chacune rotative sur le bâti de la station 10 de chauffage autour d'un axe vertical "X1, X2" respectif. La chaîne 24 de transport est engrenée autour des deux roues 28A, 28B de guidage. Au moins l'une des deux roues de guidage, dite menante, est entraînée en rotation par un moteur pour mettre en mouvement la chaîne 24 de transport afin de déplacer les éléments 22 de transport le long du circuit fermé. Les roues 28A, 28B de guidage tournent ici dans un sens antihoraire, comme cela est indiqué par une flèche "F1" de la [Fig.1].

Par exemple, les deux roues 28A, 28B de guidage sont motorisées ou liées mécaniquement en rotation de manière à entraîner simultanément la chaîne 24 de transport pour éviter des variations trop importantes de tension dans la chaîne 24.

En variante non représentée de l'invention, la chaîne 24 de transport permet de compacter les préformes en se pliant en accordéon lorsqu'elle passe dans une zone de chauffage comme cela est décrit en détails dans le document EP-B1-2.623.439.

En variante non représentée du dispositif 14 de transport, les éléments 22 de transport sont formés par des navettes indépendantes. Le dispositif 14 de convoyage comporte alors au moins un moteur linéaire pour commander le déplacement de chaque navette de manière indépendante les unes des autres le long du circuit fermé. Un tel dispositif de convoyage pour une station 10 de chauffage est par exemple décrit dans le document FR-A1-3.035.651.

Le moteur linéaire comporte un stator comportant une série de bobinages qui sont répartis le long du circuit fermé. Chaque bobinage est commandé individuellement pour induire localement un champ magnétique de manière indépendante des autres bobinages qui agit sur les navettes pour provoquer leur déplacement. A cet effet, les navettes embarquent un élément magnétique susceptible d'interagir avec le champ magnétique émis par les bobinages du stator. Les bobinages sont par exemple commandés par une unité électronique de commande (non représentée) qui est programmée de manière appropriée.

Le moteur linéaire comporte ainsi un seul stator, formé par la voie magnétique, et plusieurs navettes, formant des "rotors", commandées indépendamment le long dudit stator.

Quel que soit le mode de réalisation du dispositif 14 de convoyage, chaque élément 22 de transport porte au moins un support 16 individuel. Chaque support 16 individuel comporte un mandrin 26 qui est destiné à coopérer avec un col 27 de la préforme 12 pour la transporter.

De manière connue, le mandrin 26 est pourvu de moyens élastiques (non représentés), tel qu'un joint torique, avantageusement réalisé dans un matériau élastique (tel qu'un élastomère), qui contraint des secteurs métalliques contre une face interne du col 27 d'une préforme 12, de façon à assurer que la préforme 12 est tenue par frottement contre la paroi interne du col 27, lorsque le mandrin 26 est inséré dans le col 27 de la préforme 12.

En variante non représentée de l'invention, le mandrin 26 est destiné à saisir le col 27 de la préforme 12 par l'extérieur. Cette variante est bien connue de l'homme du métier et ne sera donc pas décrite plus en détails par la suite.

En outre, chaque support 16 individuel est susceptible d'entraîner en rotation la préforme 12 autour de son axe pendant son déplacement le long du trajet 18 de transport pour permettre le chauffage tout autour de ladite préforme 12. A cet effet, chaque support 16 individuel est monté à rotation autour d'un axe "X1" vertical dans l'élément 22 de transport associé. L'axe "X1" est coaxial à un axe principal de la préforme 12 transportée par ledit support 16 individuel.

Selon un premier exemple non représenté, le support 16 individuel est entraîné en rotation par un pignon solidaire du mandrin 26 qui coopère avec une crémaillère fixe de la station 10 de chauffage.

En variante non représentée de l'invention, la crémaillère fixe est remplacée par une courroie dentée motorisée.

Selon un autre exemple non représenté, le support 16 individuel est entraîné en rotation au moyen d'un moteur électrique embarqué sur l'élément 22 de transport.

En se reportant à nouveau à la [Fig.1], le circuit fermé comporte au moins deux tronçons 29A, 29B rectilignes qui sont séparés les uns des autres par des virages 31A, 31B. Plus particulièrement, le circuit fermé comporte ici deux tronçons 29A, 29B rectilignes parallèles qui sont liés par un premier virage 31A amont d'extrémité à 180° et par un deuxième virage 31B aval d'extrémité à 180° pour former un circuit de forme oblongue.

En variante non représentée de l'invention, le circuit fermé peut comporter plus de deux tronçons rectilignes et les virages peuvent présenter un angle inférieur à 180°. De préférence, les virages présentent un angle supérieur à 90°.

Les supports 16 individuels sont destinés à transporter des préformes 12 lorsqu'ils circulent le long des tronçons 29A, 29B rectilignes. Ainsi, les tronçons 29A, 29B rectilignes font partie du trajet 18 de transport. Le point "A" d'entrée et le point "B" de sortie sont tous les deux situés sur un même virage, ici le virage 31A amont.

La station 10 de chauffage comporte aussi une zone 30 de chauffage traversée par le trajet 18 de transport pour permettre le chauffage des préformes 12 durant leur déplacement. La zone 30 de chauffage est agencée sur le tronçon 29B rectiligne du circuit ici appelé tronçon 29B de chauffage, situé ici directement en amont du point "B" de sortie des préformes 12.

L'autre tronçon 29A rectiligne du circuit est dénué de moyens de chauffage des préformes 12 transportées. Il sera donc appelé par la suite tronçon 29A non chauffé pour être distingué du tronçon 29B de chauffage. Le tronçon 29A non chauffé est ici agencé directement en aval du point "A" d'entrée

Dans le mode de réalisation représenté aux figures, les virages 31A, 31B du circuit sont aussi dénués de moyens de chauffage des préformes 12.

La zone 30 de chauffage est destinée à chauffer les corps 33 des préformes 12 au-delà de leur température de transition vitreuse pour permettre leur formage par la station de formage pendant qu'elles sont chaudes.

Au niveau de la zone 30 de chauffage, le tronçon 29B de chauffage est bordé d'une série d'émetteurs 32 adjacents, par exemple deux rangées d'émetteurs 32 de part et d'autre du trajet 18 de transport.

Chaque émetteur 32 est équipé de sources de rayonnement électromagnétique monochromatique ou pseudomonochromatique, notamment des lasers, dont le spectre d'émission s'étend pour l'essentiel dans le domaine de l'infrarouge.

Par pseudomonochromatique, on comprend que le rayonnement émet sur une bande spectrale très étroite autour d'une valeur déterminée. Un tel rayonnement est parfois appelé quasi-monochromatique.

En variante, chaque émetteur est équipé de sources d'un rayonnement électromagnétique émettant dans le domaine des microondes.

Avantageusement, pour éviter toute fuite du rayonnement émis par les émetteurs 32 à l'extérieur de la zone 30 de chauffage selon une direction transversal au tronçon 29B de chauffage, la zone 30 de chauffage est délimitée par des parois formant un tunnel 34 de passage des préformes 12. Ainsi, les rayonnements chauffants sont uniquement susceptibles de fuir par l'entrée ou la sortie du tunnel 34 selon une direction sensiblement parallèle au tronçon 29B de chauffage, comme indiqué par les flèches "H" de la [Fig.1]

L'avantage d'un rayonnement monochromatique est que, bien choisi, il peut être concentré sur une (ou plusieurs) fréquence(s) pour laquelle (ou pour lesquelles) le comportement thermique du matériau des préformes 12 est, en termes d'absorption, particulièrement intéressant.

A titre d'exemple, pour obtenir une chauffe rapide en surface des préformes 12, on peut choisir une (ou plusieurs) fréquence(s) dans l'infrarouge pour laquelle (pour lesquelles) le matériau est très absorbant. A contrario, pour obtenir une chauffe plus lente mais plus homogène dans l'épaisseur des préformes 12, on peut choisir une (ou plusieurs) fréquence(s) pour laquelle (pour lesquelles) le matériau est relativement moins absorbant.

Ces sources sont radiantes, c'est-à-dire que le rayonnement émis est transmis aux préformes 12 sans que l'air serve de vecteur de transmission.

Une station 10 de chauffage fonctionnant à l'aide de cette technologie présente de nombreux avantages par rapport à un four classique à lampes halogènes. Notamment, dans ce type de station 10 de chauffage les émetteurs 32 rayonnent dans l'infrarouge sans diffusion de chaleur, ce qui, à la différence d'un four halogène, rend inutile toute ventilation dans la zone 30 de chauffage.

Cependant, une partie de la chaleur absorbée par le corps 33 des préformes 12 dans la zone 30 de chauffage est transmise au mandrin 26. Or, chaque support 16 individuel est amené à repasser cycliquement à travers la zone 30 de chauffage à chaque nouveau tour. La vitesse à laquelle défilent les éléments de transport ne permet pas au mandrin 26 d'évacuer toute cette chaleur entre deux passages dans la zone 30 de chauffage. Il en résulte qu'au bout d'un certain temps de fonctionnement de la station 10 de chauffage, les mandrins 26 accumulent la chaleur et peuvent atteindre la température de transition vitreuse, ce qui est susceptible d'endommager les cols 27 des préformes 12.

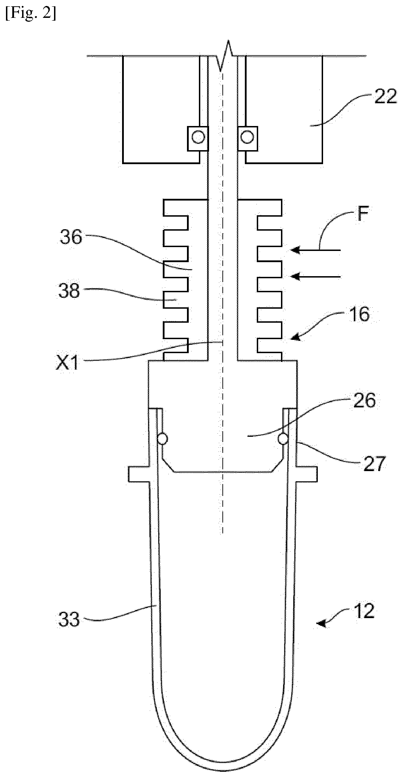

Pour que la température du mandrin 26 demeure au-dessous de la température de transition vitreuse du col 27, il est prévu de munir le support 16 individuel d'un radiateur 36 qui est destiné à être situé à l'extérieur de la préforme 12 lorsque le mandrin 26 est inséré dans le col 27, comme cela est représenté à la [Fig.2]. Le radiateur 36 est agencé en contact direct avec le mandrin 26 pour que la chaleur du mandrin 26 soit évacuée par conduction vers le radiateur 36 puis vers l'air via une surface d'échange thermique du radiateur 36.

Le radiateur 36 peut être réalisé en une seule pièce avec un élément structurel du mandrin 26 ou encore formé d'une pièce distincte agencée en contact thermique avec le mandrin 26. Le radiateur 36 est réalisé en un matériau présentant une conductivité thermique élevée, notamment un matériau métallique tel que l'acier ou de l'aluminium.

Comme représenté à la [Fig.2], la surface d'échange thermique entre le radiateur 36 et l'air est avantageusement augmentée par la présence d'ailettes 38, ici d'ailettes circulaires. Le radiateur 36 présente ici une forme globalement cylindrique coaxiale au mandrin 26.

Lorsqu'on souhaite augmenter la cadence de production des récipients, la vitesse de défilement des préformes 12 peut être augmentée. Cependant, si cette vitesse augmente trop, le radiateur 36 ne dispose plus de suffisamment de temps pour évacuer la chaleur accumulée dans le mandrin 26 avant son prochain passage dans la zone 30 de chauffage.

Pour éviter de perturber le chauffage des préformes 12 et pour éviter de dépenser de l'énergie inutilement pour compenser un refroidissement pendant la chauffe, l'invention propose de disposer des moyens 40 de refroidissement des supports 16 individuels le long du tronçon 29A non chauffé. Plus particulièrement, le tronçon 29A non chauffé est bordé par des moyens 40 de refroidissement des supports 16 individuels.

Les moyens 40 de refroidissement permettent avantageusement de refroidir de manière préférentielle le radiateur 36 des supports 16 individuels.

Les moyens 40 de refroidissement sont formés par un dispositif 42 de ventilation. Plus particulièrement, il s'agit d'un dispositif 42 de ventilation qui émet un flux "F" d'air transversalement par rapport au sens de déplacement des préformes 12 le long du tronçon 29A non chauffé. Le flux "F" d'air traverse ainsi le tronçon 29A non chauffé. Le flux "F" d'air est représenté par des flèches aux figures 1 et 2.

Le flux "F" d'air est émis vers une direction opposée au tronçon 29B de chauffage de manière à garantir qu'il ne vienne pas perturber le chauffage des préformes. Plus particulièrement, le dispositif 42 de ventilation est ici agencé à l'intérieur du circuit fermé de manière à émettre le flux "F" d'air vers l'extérieur du circuit fermé en passant à travers le tronçon 29A non chauffé.

Le flux "F" d'air est dirigé principalement vers le radiateur 36 des supports 16 individuels pour permettre d'accélérer l'évacuation de la chaleur. Les mandrins 26 étant insérés dans le col 27 des préformes 12, il ne serait en effet pas efficace de diriger le flux d'air vers le mandrin 26. Le radiateur 36 demeure au contraire à l'extérieur de la préforme 12 et il peut donc être en contact direct avec le flux "F" d'air.

Le flux "F" d'air forme ici une lame d'air qui s'étend sur une grande portion du tronçon 29A non chauffé afin de refroidir efficacement les radiateurs 36 sur toute une portion de leur trajet 18 de transport. On peut aussi réaliser plusieurs flux d'air répartis régulièrement le long du tronçon 29A non chauffé.

Avantageusement, mais pas obligatoirement, en plus de la fonction de refroidissement, le tronçon 29A non chauffé du circuit peut aussi être utilisé pour réaliser d'autres opérations de contrôle et/ou de traitement des préformes 12.

La réalisation de ces opérations sur ce tronçon 29A non chauffé permet de bénéficier d'une durée supérieure à ce qui était auparavant disponible et/ou de réduire les coûts de fabrication de l'installation.

Selon un premier exemple représenté à la [Fig.1], qui pourra être combiné ou non avec les autres exemples, le tronçon 29A non chauffé est bordé par un dispositif 44 de mesure au défilé de la température des préformes 12 circulant sur le tronçon 29A non chauffé, tel qu'un capteur ou une caméra thermique. Ceci permet d'adapter au plus juste la puissance des émetteurs 32 pour obtenir une chauffe très précise des préformes 12. A cet effet, le dispositif 44 de mesure de la température est installé en regard des préformes 12 circulant le long du tronçon 29A non chauffé. Cet emplacement est particulièrement adapté pour une mesure de température car, le tronçon 29A non chauffé étant séparé du tronçon 29B de chauffage par les deux virages 31A, 31B, il est garanti que le rayonnement des émetteurs 32 ne puisse venir perturber la mesure de température, même en cas de fuite "H" de tel rayonnement par les extrémités du tunnel.

Selon encore un exemple qui peut être combiné ou non avec les autres exemples, le tronçon 29A non chauffé est bordé par un dispositif 46 de contrôle visuel des préformes 12 circulant sur le tronçon 29A non chauffé. Il s'agit par exemple d'un dispositif de capture d'une image de la préforme 12, tel qu'une caméra ou un appareil photographique, qui permet de capturer une image numérique apte à être analysée par une unité 48 électronique de l'installation pour déterminer si certains paramètres de chaque préforme 12 sont conformes à des consignes. Parmi les paramètres susceptibles d'être contrôlés, on peut citer, à titre d'exemple non limitatif, la hauteur des préformes 12, la colorimétrie des préformes 12, le taux d'opacité des préformes 12, les dimensions des préformes 12...

Selon encore un exemple qui peut être combiné ou non avec les autres exemples, le tronçon 29A non chauffé est bordé par un spectromètre 50 qui permet de mesurer la capacité d'absorption des infrarouges par la préformes 12 circulant sur le tronçon 29A non chauffé. Ceci permet notamment d'adapter la puissance des émetteurs 32 lors du passage de chaque préforme 12 dans la zone 30 de chauffage pour obtenir un chauffage optimal.

Selon encore un exemple qui peut être combiné ou non avec les autres exemples, le tronçon 29A non chauffé est bordé par un dispositif 52 de décontamination des préformes 12 pendant leur circulation sur le tronçon 29A non chauffé. Ainsi, les préformes 12 sont décontaminé juste avant d'être chauffées. En réduisant le temps entre la décontamination et le chauffage, on réduit ainsi les risques de recontamination avant le formage.

Le dispositif 52 de décontamination des préformes 12 comporte par exemple des émetteurs de rayons ultraviolets. Du fait de la longueur du tronçon 29A non chauffé, les préformes 12 sont avantageusement exposées au rayonnement ultraviolet sur une durée supérieure à leur temps de passage dans la zone 30 de chauffage.

En variante, le dispositif 52 de décontamination des préformes 12 comporte au moins une buse de pulvérisation d'un liquide de décontamination, tel que du peroxyde d'hydrogène. Le liquide de décontamination est avantageusement activé par chauffage. Ainsi, en pulvérisant le liquide de décontamination juste avant le passage des préformes 12 dans la zone 30 de chauffage, cela permet d'activer très rapidement le liquide de décontamination avant son évaporation.

L'agencement selon les enseignements de l'invention permet d'obtenir une station 10 de chauffage susceptible de chauffer des préformes 12 à haute cadence sans risque de déformation des cols 27 des préformes 12 tout en économisant de l'énergie et en obtenant un profil de chauffe très précis des préformes 12.

L'agencement selon les enseignements de l'invention permet d'obtenir une station 10 de chauffage très compacte mais néanmoins susceptible d'être équipée de nombreuses fonctions.

En outre, en agençant les moyens de contrôle de la préforme 12 sur le tronçon 29A non chauffé, lesdits moyens de contrôle ne sont pas susceptibles d'être atteint par un rayonnement chauffant venant de la zone 30 de chauffage.

## Revendications

1. Station (10) de chauffage de préformes (12) en matériau thermoplastique pour une installation de production de récipients par formage desdites préformes (12), comportant un dispositif (14) de convoyage de préformes (12) comportant des supports (16) individuels circulant en un circuit fermé, chaque support (16) individuel étant destiné à transporter une préforme (12) en déplacement continu, le circuit fermé comportant :
- au moins un tronçon (29B) de chauffage de préformes (12) bordé d'au moins une rangée d'émetteurs (32) de rayonnement électromagnétique monochromatique ou pseudomonochromatique ;
- au moins un tronçon (29A) non chauffé dénué de moyens de chauffage des préformes (12) transportées ;
- chaque tronçon (29A) non chauffé étant séparé d'un tronçon chauffé adjacent par au moins un virage (31A) amont et par au moins un virage (31B) aval ;
le tronçon (29A) non chauffé étant bordé par des moyens (40) de refroidissement des supports (16) individuels.

2. Station (10) de chauffage selon la revendication précédente, **caractérisée en ce que** les moyens (40) de refroidissement sont formés par un dispositif (42) de ventilation qui émet un flux (F) d'air traversant le tronçon (29A) non chauffé.

3. Station (10) de chauffage selon la revendication précédente, **caractérisé en ce que** le flux d'air émis par le dispositif (42) de ventilation est orienté vers une direction opposée au tronçon (29B) de chauffage.

4. Station (10) de chauffage selon l'une quelconque des revendications, **caractérisée en ce que** chaque support (16) individuel comporte un mandrin (26) destiné à être inséré dans un col (27) d'une préforme (12).

5. Station (10) de chauffage selon la revendication précédente, **caractérisé en ce que** chaque support (16) individuel comporte un radiateur (36) qui est agencé pour évacuer la chaleur accumulée par le mandrin (26) et qui est agencé à l'extérieur de la préforme (12) lorsque le mandrin (26) est inséré dans le col (27), les moyens (40) de refroidissement permettant un refroidissement du radiateur (36).

6. Station (10) de chauffage selon l'une quelconque des revendications précédentes, **caractérisée en ce qu'**au moins un tronçon (29A) non chauffé est bordé par un dispositif (44) de mesure de la température des préformes (12).

7. Station (10) de chauffage selon l'une quelconque des revendications précédentes, **caractérisée en ce qu'**au moins un tronçon (29A) non chauffé est bordé par un dispositif (52) de décontamination des préformes (12).

8. Station (10) de chauffage selon la revendication précédente, **caractérisé en ce que** le dispositif (52) de décontamination des préformes (12) comporte des émetteurs (32) de rayons ultraviolets.

9. Station (10) de chauffage selon la revendication 7, **caractérisée en ce que** le dispositif (52) de décontamination des préformes comporte au moins une buse de pulvérisation d'un liquide de décontamination, tel que du peroxyde d'hydrogène.

10. Station (10) de chauffage selon l'une quelconque des revendications précédentes, **caractérisée en ce que** le tronçon (29A) non chauffé est bordé par un dispositif (46) de contrôle visuel des préformes (12).

11. Station (10) de chauffage selon l'une quelconque des revendications précédentes, **caractérisée en ce que** le tronçon (29A) non chauffé est bordé par un spectromètre (50) de contrôle des préformes (12).

## Patentansprüche

1. Heizstation (10) für Vorformlinge (12) aus thermoplastischem Material für eine Anlage zur Herstellung von Behältern durch Formen der Vorformlinge (12), welche eine Vorrichtung (14) zum Fördern von Vorformlingen (12) umfasst, die einzelne, in einem geschlossenen Kreislauf umlaufende Träger (16) umfasst, wobei jeder einzelne Träger (16) dazu bestimmt ist, einen Vorformling (12) in kontinuierlicher Bewegung zu transportieren, wobei der geschlossene Kreislauf umfasst:
- mindestens einen Abschnitt (29B) zum Erwärmen von Vorformlingen (12), an den mindestens eine Reihe von Emittern (32) monochromatischer oder pseudomonochromatischer elektromagnetischer Strahlung grenzt;
- mindestens einen nicht beheizten Abschnitt (29A) ohne Mittel zum Erwärmen der transportierten Vorformlinge (12);
- wobei jeder nicht beheizte Abschnitt (29A) durch mindestens eine vorgelagerte Biegung (31 A) und durch mindestens eine nachgelagerte Biegung (31B) von einem benachbarten beheizten Abschnitt getrennt ist;
wobei an den nicht beheizten Abschnitt (29A) Mittel (40) zur Kühlung der einzelnen Träger (16) grenzen.

2. Heizstation (10) nach dem vorhergehenden Anspruch, **dadurch gekennzeichnet, dass** die Kühlmittel (40) von einer Belüftungsvorrichtung (42) gebildet werden, die einen Luftstrom (F) abgibt, der durch den nicht beheizten Abschnitt (29A) strömt.

3. Heizstation (10) nach dem vorhergehenden Anspruch, **dadurch gekennzeichnet, dass** der von der Belüftungsvorrichtung (42) abgegebene Luftstrom in eine Richtung gerichtet ist, die zu dem Abschnitt zum Erwärmen (29B) entgegengesetzt ist.

4. Heizstation (10) nach einem der Ansprüche, **dadurch gekennzeichnet, dass** jeder einzelne Träger (16) einen Dorn (26) umfasst, der dazu bestimmt ist, in einen Hals (27) eines Vorformlings (12) eingesetzt zu werden.

5. Heizstation (10) nach dem vorhergehenden Anspruch, **dadurch gekennzeichnet, dass** jeder einzelne Träger (16) einen Kühler (36) umfasst, der dazu eingerichtet ist, die von dem Dorn (26) angesammelte Wärme abzuführen, und der außerhalb des Vorformlings (12) angeordnet ist, wenn der Dorn (26) in den Hals (27) eingesetzt ist, wobei die Kühlmittel (40) eine Kühlung des Kühlers (36) ermöglichen.

6. Heizstation (10) nach einem der vorhergehenden Ansprüche, **dadurch gekennzeichnet, dass** an mindestens einen nicht beheizten Abschnitt (29A) eine Vorrichtung (44) zur Messung der Temperatur der Vorformlinge (12) grenzt.

7. Heizstation (10) nach einem der vorhergehenden Ansprüche, **dadurch gekennzeichnet, dass** an mindestens einen nicht beheizten Abschnitt (29A) eine Vorrichtung (52) zur Dekontaminierung der Vorformlinge (12) grenzt.

8. Heizstation (10) nach dem vorhergehenden Anspruch, **dadurch gekennzeichnet, dass** die Vorrichtung (52) zur Dekontaminierung der Vorformlinge (12) Emitter (32) von ultravioletten Strahlen umfasst.

9. Heizstation (10) nach Anspruch 7, **dadurch gekennzeichnet, dass** die Vorrichtung (52) zur Dekontaminierung der Vorformlinge mindestens eine Düse zum Sprühen einer Dekontaminationsflüssigkeit, wie etwa Wasserstoffperoxid, umfasst.

10. Heizstation (10) nach einem der vorhergehenden Ansprüche, **dadurch gekennzeichnet, dass** an den nicht beheizten Abschnitt (29A) eine Vorrichtung (46) zur visuellen Prüfung der Vorformlinge (12) grenzt.

11. Heizstation (10) nach einem der vorhergehenden Ansprüche, **dadurch gekennzeichnet, dass** an den nicht beheizten Abschnitt (29A) ein Spektrometer (50) zur Prüfung der Vorformlinge (12) grenzt.

## Claims

1. Station (10) for heating preforms (12) made of thermoplastic material for an installation for producing containers by forming said preforms (12), comprising a device (14) for conveying preforms (12) comprising individual supports (16) which circulate in a closed circuit, each individual support (16) being intended to transport a preform (12) with continuous movement, the closed circuit comprising:
- at least one section (29B) for heating preforms (12) which is bordered by at least one row of emitters (32) of monochromatic or pseudo-monochromatic electromagnetic radiation;
- at least one non-heated section (29A) which has no means for heating the transported preforms (12);
- each non-heated section (29A) being separated from an adjacent heated section by at least one upstream bend (31A) and by at least one downstream bend (31B);
the non-heated section (29A) being bordered by means (40) for cooling the individual supports (16).

2. Heating station (10) according to the preceding claim, **characterized in that** the cooling means (40) are formed by a ventilation device (42) which emits an air flow (F) passing through the non-heated section (29A).

3. Heating station (10) according to the preceding claim, **characterized in that** the air flow emitted by the ventilation device (42) is oriented in a direction away from the heating section (29B).

4. Heating station (10) according to any one of the claims, **characterized in that** each individual support (16) comprises a mandrel (26) intended to be inserted into a neck (27) of a preform (12).

5. Heating station (10) according to the preceding claim, **characterized in that** each individual support (16) has a radiator (36) which is arranged to discharge the heat accumulated by the mandrel (26) and which is arranged outside the preform (12) when the mandrel (26) is inserted into the neck (27), the cooling means (40) allowing the radiator (36) to be cooled.

6. Heating station (10) according to any one of the preceding claims, **characterized in that** at least one non-heated section (29A) is bordered by a device (44) for measuring the temperature of the preforms (12).

7. Heating station (10) according to any one of the preceding claims, **characterized in that** at least one non-heated section (29A) is bordered by a device (52) for decontaminating the preforms (12).

8. Heating station (10) according to the preceding claim, **characterized in that** the device (52) for decontaminating the preforms (12) comprises ultraviolet ray emitters (32).

9. Heating station (10) according to Claim 7, **characterized in that** the device (52) for decontaminating the preforms comprises at least one nozzle for spraying a decontamination liquid, such as hydrogen peroxide.

10. Heating station (10) according to any one of the preceding claims, **characterized in that** the non-heated section (29A) is bordered by a device (46) for visually inspecting the preforms (12).

11. Heating station (10) according to any one of the preceding claims, **characterized in that** the non-heated section (29A) is bordered by a spectrometer (50) for inspecting the preforms (12).
